# EUROPEAN PATENT SPECIFICATION

(11) **EP 2 463 594 B1**
(45) Date of publication and mention of the grant of the patent: **06.01.2016**
(21) Application number: 10781396.6
(22) Date of filing: 08.01.2010
(51) Int. Cl.: F24F 1/00, F24D 3/10, F28F 9/00

(54) **AIR EVACUATION DEVICE, HEAT EXCHANGE UNIT AND FIXING TOOL**
ENTLÜFTUNGSVORRICHTUNG, WÄRMETAUSCHEREINHEIT UND BEFESTIGUNGSWERKZEUG
DISPOSITIF D'ÉVACUATION D'AIR, UNITÉ D'ÉCHANGE DE CHALEUR ET OUTIL DE FIXATION

(43) Date of publication of application: 13.06.2012
(73) Proprietor: Daikin Industries, Ltd., Osaka-shi, Osaka 530-8323 (JP); Daikin Europe N.V., 8400 Oostende (BE)
(72) Inventor: KIZAWA, Toshihiro, Kusatsu-shi Shiga 525-8526 (JP); NAKAI, Akinori, Kusatsu-shi Shiga 525-8526 (JP); HIRAOKA, Aoi, Kusatsu-shi Shiga 525-8526 (JP)
(74) Representative: Hoffmann Eitle
(86) International application number: PCT/JP2010/000099
(87) International publication number: WO 2011/083519

(56) References cited:
- JP-A- 9 210 392
- JP-U- H0 618 814
- JP-U- 49 065 060
- JP-U- 50 023 051
- JP-U- 53 030 761
- JP-U- 57 010 216
- JP-U- H04 113 817

## Description

The present invention relates to an air a heat exchange unit having an air vent apparatus; and particularly an air vent apparatus for venting the air of a circulation passage of a heat exchanger.

### BACKGROUND ART

An air vent apparatus used to vent air in a circulation passage of a heat exchanger is provided inside an air conditioner or another heat exchange unit comprising a heat exchanger, as disclosed in JP-U-2-77511), for example. Since concerns are presented in that, e.g., the medium inside the circulation passage will be blown out during the air venting operation by the air vent apparatus, the air venting operation is performed by a technician when the heat exchange unit is installed. To ensure safety, the air vent apparatus is set up in a location where it cannot be easily operated by the user of the heat exchange unit. A heat exchange unit having a securing implement having a base plate as defined in the preamble of claim 1 is known from JP-U-57-10216. An air vent apparatus in which the valve is secured at a side of the heat exchanger is known from JP-U-49-65060. Another air vent apparatus in which the nozzle is oriented parallel to the heat exchanger is disclosed in JP-U-50-23051.

### SUMMARY OF THE INVENTION

### <Technical Problem>

However, air bubbles sometimes form in the circulation passage after installation, and these air bubbles are sometimes the cause of abnormal noises. In such cases, if the user can perform air venting, the technician does not need to go through the trouble of performing air venting and can make repairs easily.

An object of the present invention is to provide a heat exchange unit comprising an air vent apparatus whereby a user can easily perform air venting when air bubbles have formed in the circulation passage of the heat exchanger.

### <Solution to Problem>

A heat exchange unit according to the present invention is defined in claim 1.

In the heat exchange unit according to the present invention, the valve is disposed on the front surface of the heat exchanger and in a position facing the opening of the casing. During maintenance of the heat exchanger, the opening can be exposed by the maintenance opening structure. A user can insert their hand through this opening, for example, to open the valve and perform air venting. Therefore, the user of the heat exchange unit can open the valve and easily perform the operation for performing air venting by the same procedure as the maintenance of the heat exchanger, without removing the cover over the entire unit or the components inside the internal unit as in conventional practice.

The valve of the heat exchange unit according to the present invention has a nozzle for venting air. The heat exchange unit further comprises a securing implement. The securing implement secures the valve in place on the front surface of the heat exchanger. Therefore, the securing implement has a holding part for holding the nozzle of the valve in an orientation pointed toward the heat exchanger.

In the heat exchange unit according to the present invention, since the nozzle of the valve is held in an orientation pointed toward the heat exchanger by the holding part of the securing implement, the medium discharged from the nozzle strikes the heat exchanger, flows over the heat exchanger, and can be led to a drain pan provided for the heat exchanger. A hose for causing the medium to flow from the nozzle to the drain pan can thereby be omitted.

The securing implement of the heat exchange unit according to an embodiment of the present invention further has, in front of the nozzle, a force reducer for weakening the force of the medium discharged from the nozzle of the valve.

With the heat exchange unit according to this embodiment of the present invention, the force of the medium discharged from the nozzle of the valve is weakened by the force reducer, whereby the medium is no longer scattered deep into the heat exchanger, and the medium can be led downward along the front surface of the heat exchanger. Since the force of the medium exiting the nozzle is weakened, the medium can be prevented from hitting the heat exchanger and splashing during the air venting operation.

The heat exchanger of the heat exchange unit according to an embodiment of the present invention has a heat transfer tube for causing the medium to flow into the interior, whereby the heat of the medium is transmitted. The securing implement further has a fitting part that fits with the heat transfer tube of the heat exchanger in order to secure the securing implement to the heat exchanger.

With the heat exchange unit according to this embodiment of the present invention, since the fitting part is fitted with the heat transfer tube, the securing implement is directly secured to the heat exchanger, the positional relationship between the securing implement and the heat exchanger is easily set, and the structure of the securing implement can be simplified.

The valve of the heat exchange unit according to an embodiment of the present invention has an operating knob for opening and closing the valve. The securing implement further has a base plate. The base plate is provided with a holding part. Furthermore, the base plate has a guard region which extends in the space between the operating knob and the heat exchanger in a state in which the valve is held in the holding part.

With the heat exchange unit according to this embodiment of the present invention, the guard area held by the base plate between the operating knob and the heat exchanger provides the effect of impeding any fingers turning the operating knob from coming in contact with the heat exchanger.

The heat exchange unit according to an embodiment of the present invention further comprises a tube connecting the circulation passage and the valve. The securing implement further has a protective film for protecting the tube from the heat exchanger, the protective film being disposed between the tube and the heat exchanger.

With the heat exchange unit according to this embodiment of the present invention, the tube can be prevented from coming in contact with a location of the heat exchanger where the tube is easily scratched, by the protective film disposed between the tube and the heat exchanger.

The securing implement of the heat exchange unit according to an embodiment of the present invention further has a cover for covering a periphery of the nozzle of the valve in a state in which the valve is held in the holding part.

With the heat exchange unit according to this embodiment of the present invention, the splashing of the medium scattering around the periphery of the nozzle is blocked by the cover, and the medium does not scatter past the cover.

The holding part of the heat exchange unit according to an embodiment of the present invention has a clamping part for clamping the valve, and a locking part for immobilizing the clamping part in order to keep the valve in a state of being clamped by the clamping part. The holding part includes a valve-clamping area. The valve-clamping area formed when the clamping part is immobilized by the locking part includes a portion smaller than the external shape of the valve.

With the heat exchange unit according to this embodiment of the present invention, when an attempt is made to clamp the valve with a portion smaller than the external shape of the valve, the clamping part is pushed by the valve and therefore rises, the locking force of the locking part is maximized, the clamping part is firmly caught by the locking part, and therefore, does not come loose easily.

The securing implement of the heat exchange unit according to an embodiment of the present invention secures the nozzle in place at a position where the medium discharged from the nozzle flows over the front surface of the heat exchanger.

With the heat exchange unit according to this embodiment of the present invention, the medium can be led downward along the front surface of the heat exchanger due to the secured location of the nozzle.

The base plate of the heat exchange unit according to an embodiment of the present invention has on a front surface a rib extending from one end edge to another end edge that face each other horizontally.

With the heat exchange unit according to this embodiment, condensed water flowing over the surface of the base plate must flow over the rib, and the speed at which the condensed water flows therefore decreases. The condensed water thereby no longer forcefully flows over the surface of the base plate of the securing implement or forcefully drips down from the base plate.

With the air vent apparatus according to the present invention, since the nozzle of the valve is held in an orientation pointed toward the heat exchanger by the holding part of the securing implement, the medium exiting the nozzle of the valve can be led to the drain pan provided for the heat exchanger. A hose for causing the medium to flow from the nozzle to the drain pan can therefore be omitted.

### <Advantageous Effects of Invention>

With the heat exchange unit according to the present invention, air venting can be performed by a simple procedure that is no different from that when performing maintenance of the heat exchanger and the user of the heat exchange unit can enact the air venting operation in a simple manner without relying on the installation technician. In addition, when air venting is not being performed, adverse events in which the user mistakenly operates the valve can be prevented because the valve is also covered in the same manner as the heat exchanger.

With the heat exchange unit according to the present invention, the hose or the like connecting to the nozzle of the valve is omitted, the air vent apparatus can therefore be configured at low cost, and the heat exchange unit can be made more compact.

With the heat exchange unit according to claim 2 of the present invention, since the medium exiting the nozzle flows over the front surface of the heat exchanger, it is possible to easily confirm that air venting is complete and the medium is coming out, and the air venting operation is simplified.

With the heat exchange unit according to claim 3 of the present invention, not only is the securing implement made less expensive by the simplification of the securing implement, but attaching the securing implement is also simplified, and the manufacturing cost of the heat exchange unit can be reduced.

With the heat exchange unit according to claim 4 of the present invention, safety can be improved because the base plate impedes any fingers turning the operating knob from coming in contact with the heat exchanger.

With the heat exchange unit according to claim 5 of the present invention, the protective film can prevent the tube from being scratched by the fins or tube plate of the heat exchanger.

With the heat exchange unit according to claim 6 of the present invention, the cover prevents the medium from getting on the technician performing air venting during the air venting operation.

With the heat exchange unit according to claim 7 of the present invention, secure locking can be provided by the locking part, making it possible to prevent adverse events in which the holding part is released due to the force acting on the operating knob when the operating knob is being operated.

With the heat exchange unit according to claim 8 of the present invention, since the medium exiting the valve flows over the front surface of the heat exchanger, it is possible to easily confirm that air venting is complete and the medium is coming out, and the air venting operation is simplified.

With the heat exchange unit according to claim 9 of the present invention, the base plate of the securing implement can prevent the condensed water of the heat exchanger from splashing.

### BRIEF DESCRIPTION OF THE DRAWINGS

FIG. 1 is a circuit diagram showing part of a circuit to which a heat exchange unit according to an embodiment of the present invention is connected.
FIG. 2 is an exploded perspective view of the heat exchange unit of FIG. 1.
FIG. 3 is a front view of a heat exchanger housed inside the heat exchange unit of FIG. 2.
FIG. 4 is a side view of the heat exchanger shown in FIG. 3.
FIG. 5 is a cross-sectional view along line A-A of FIG. 3.
FIG. 6 is a cross-sectional view along line B-B of FIG. 3.
FIG 7 is a cross-sectional view along line C-C of FIG. 3.
FIG. 8 is a front view of the main body of a securing implement.
FIG. 9 is a rear view of the main body shown in FIG. 8.
FIG. 10 is a side view of the main body shown in FIG. 8.
FIG. 11 is a plan view of the main body shown in FIG. 8.
FIG. 12 is a cross-sectional view along line D-D of FIG. 8.
FIG. 13 is a cross-sectional view along line E-E of FIG. 8.
FIG. 14 is a cross-sectional view along line F-F of FIG. 8.
FIG. 15 is a cross-sectional view showing a state in which a clamping part of the main body shown in FIG. 12 is closed.
FIG. 16 is a front view of an attachment of the securing implement.
FIG. 17 is a side view of the attachment shown in FIG. 16.
FIG. 18 is a rear view of the securing implement wherein the main body of FIG. 8 and the attachment of FIG. 16 have been assembled.
FIG. 19 is a plan view of the securing implement of FIG. 18.

### DESCRIPTION OF EMBODIMENTS

A convector as a heat exchange unit according to an embodiment of the present invention is described herein below. The following descriptions are made in the order of the circulation passage of the convector, the structure of the convector, the configuration and securing of an air vent apparatus housed inside the convector, and a securing implement of the air vent apparatus.

### <Circulation Passage of Convector>

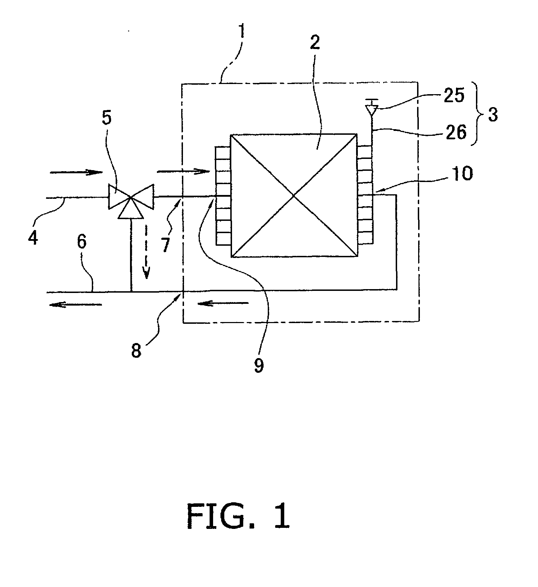

FIG. 1 is a circuit diagram showing the convector and the circulation passage of a medium around the periphery of the convector. In this convector 1, water (warm water or cold water) is circulated as a medium for transmitting heat. This convector 1 comprises a heat exchanger 2 for performing heat exchange between the circulated water and indoor air, and an air vent apparatus 3 for venting air from the circulation passage which circulates water through the heat exchanger 2.

A feed tube 4 through which water flows from a chiller or another heat source (not shown) is connected to the inlet of a three-way valve 5. This three-way valve 5 has a first outlet for causing the incoming water to flow to the convector 1, and a second outlet for allowing the incoming water to flow to a feed tube 6 which returns water to the chiller or other heat source. The water that has exited the second outlet of the three-way valve 5 flows to the feed tube 6 without circulating through the convector 1.

The convector 1 is provided with an inlet connection port 7 into which water flows before heat exchange, and an outlet connection port 8 from which water flows out after heat exchange. The water that has exited the first outlet of the three-way valve 5 flows into the convector 1 from the inlet connection port 7 of the convector 1. The inlet connection port 7 of the convector 1 is connected to an inlet header 9 of the heat exchanger 2, and the water flowing into the convector 1 is led to the heat exchanger 2. Water that has undergone heat exchange in the heat exchanger 2 is led from an outlet header 10 to the outlet connection port 8, and the water flows from the outlet connection port 8 to the feed tube 6.

The air vent apparatus 3 for venting air from the water circulation passage as described above is configured such that a valve 25 is connected to the top part of the outlet header 10 by a capillary tube 26.

### <Structure of Convector>

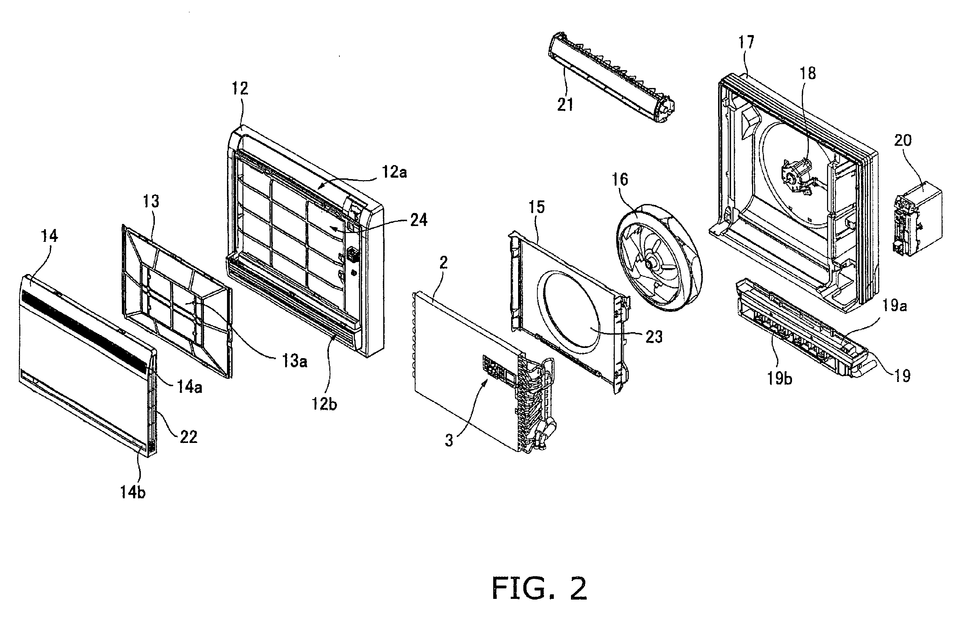

The structure of the convector 1 to which the air vent apparatus 3 is secured is described using the exploded perspective view of FIG. 2. The convector 1 comprises a front surface grill 12, an air filter 13, and an intake grill 14 which are superposed on the front of the heat exchanger 2 in the stated order from the side near the heat exchanger 2. Behind the heat exchanger 2, a bell mouth 15 and a turbofan 16 are disposed in the stated order from the side near the heat exchanger 2, and a bottom frame 17 is disposed so as to cover the rear as well as the top, bottom, left, and right of the turbofan 16.

A fan motor 18 for driving the turbofan 16 is attached along with a cover to the substantial center of the bottom frame 17 as seen from the front. Also attached to the bottom surface of the bottom frame 17 is an assembly 19 having a drain pan 19a for receiving condensed water forming in the heat exchanger 2 and a ventilation duct 19b of a bottom discharge port. An electrical components box 20 is attached to the inside surface of the bottom frame 17, and control of the rotational speed of the turbofan 16 and other factors is performed using a microcomputer housed inside the electrical components box 20. Power to the fan motor 18 and other internal devices is supplied from a power source line or the like leading to the electrical components box 20.

In the front surface grill 12, an air direction adjuster 21 is attached to an opening 12a on the top of the grill so as to be capable of turning, and the ventilation duct 19b of the assembly 19 is attached to an opening 12b on the bottom of the grill. The opening 12a on the top of the front surface of the front surface grill 12 is connected with a top discharge port 14a of the intake grill 14, and the opening 12b on the bottom of the front surface is connected with a bottom discharge port 14b of the intake grill 14. An intake port 22 is provided to the side of the intake grill 14, and indoor air drawn in through this intake port 22 passes through the air filter 13 and the front surface grill 12 and flows to the heat exchanger 2. Conditioned air that has undergone heat exchange by passing through the heat exchanger 2 is blown out from a circular opening 23 in the bell mouth 15 toward the bottom frame 17 by the turbofan 16. The conditioned air that has reached the bottom frame 17 then runs into the bottom frame 17 to be blown out of the convector 1 through either the top discharge port 14a or the bottom discharge port 14b.

The air vent apparatus 3 is attached to the upper right of the heat exchanger 2 as seen from the front surface. The details of the method for securing the air vent apparatus 3 are described hereinafter. Since the air vent apparatus 3 is provided to the front surface of the heat exchanger 2, the air vent apparatus 3 is exposed to the indoor air before heat exchange is performed in the heat exchanger 2.

The air vent apparatus 3 secured to the front surface of the heat exchanger 2 protrudes forward through openings 24 in the lattice of the front surface grill 12. Therefore, the periphery of the valve, which is the portion of the air vent apparatus 3 that protrudes the farthest, is disposed in a location near the center so as to overlap a portion 13a of the air filter 13 that protrudes forward in a front view. The air vent apparatus 3 and the air filter 13 are made to have a positional relationship such as the one previously described and are designed so that the air vent apparatus 3 does not come in contact with the air filter 13. Since the air vent apparatus 3 is arranged in this manner, a user can operate the air vent apparatus 3 by removing the intake grill 14 and the air filter 13.

In other words, the intake grill 14 and the air filter 13 constitute a maintenance opening structure for exposing the openings 24 in the front surface of the heat exchanger 2 during maintenance.

The water discharged from the air vent apparatus 3 when air venting is performed by the air vent apparatus 3 is discharged toward the heat exchanger 2. The structure is one in which the water flows along the front surface of the heat exchanger 2 and into the drain pan 19a from the heat exchanger 2. Because of this structure, there is no need for a hose for allowing the water to flow from the air vent apparatus 3 to the drain pan 19a as in conventional practice. Since the water during air venting flows along the front surface of the heat exchanger 2, the user (operator) can perceive that water has been drained appropriately by visually confirming that water is flowing.

To operate this manner of air venting, the user must turn an operating knob of the air vent apparatus 3 to open and close the valve. Therefore, the user may get injured by the fins of the heat exchanger 2. In view of this, the air vent apparatus 3 is secured to the heat exchanger 2 by a plate-shaped securing implement, and this securing implement protects the user from injury. The air vent apparatus 3 directs the opening of the valve in the direction of the heat exchanger 2, and covers the front surface of the valve with the securing implement. With this type of configuration, the water that has exited the valve does not scatter in front of the valve, and water can be prevented from reaching the user.

### <Configuration, and Securing of Air Vent Apparatus>

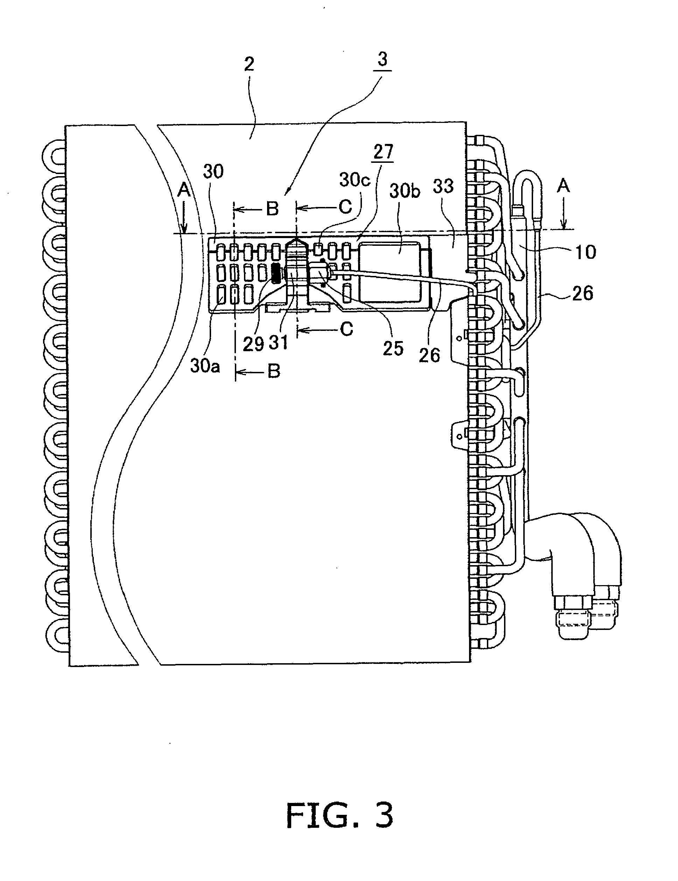

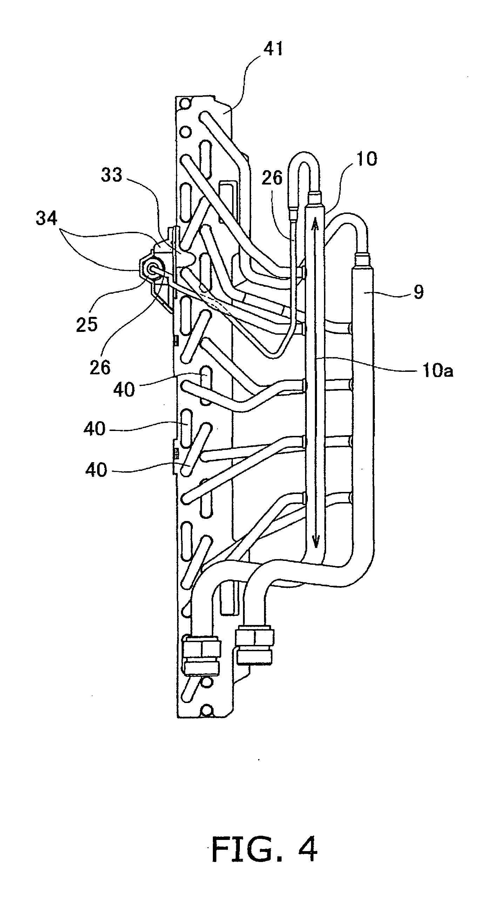

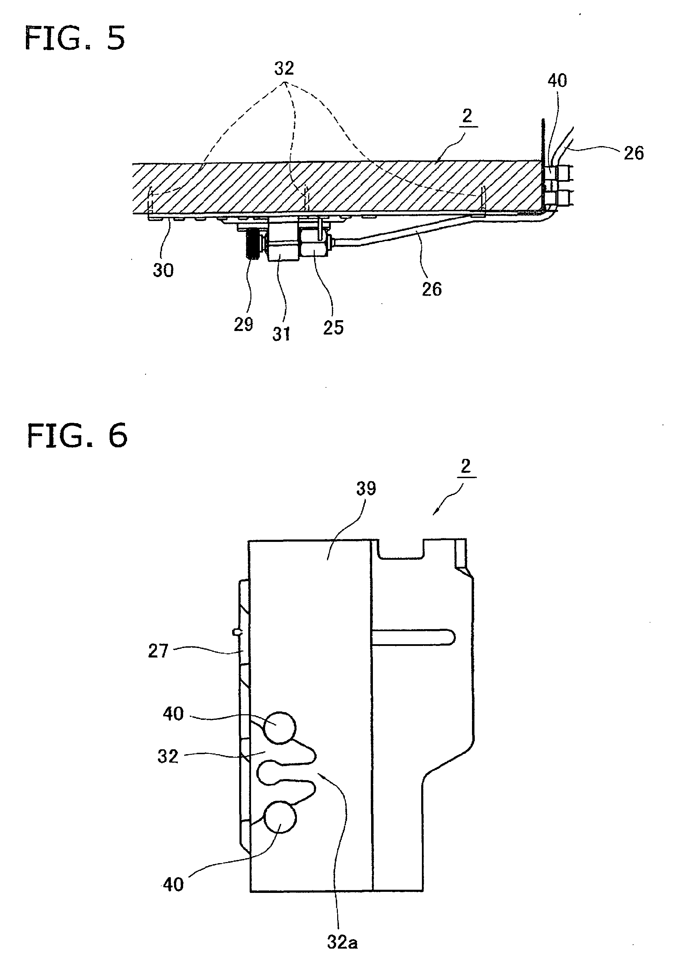

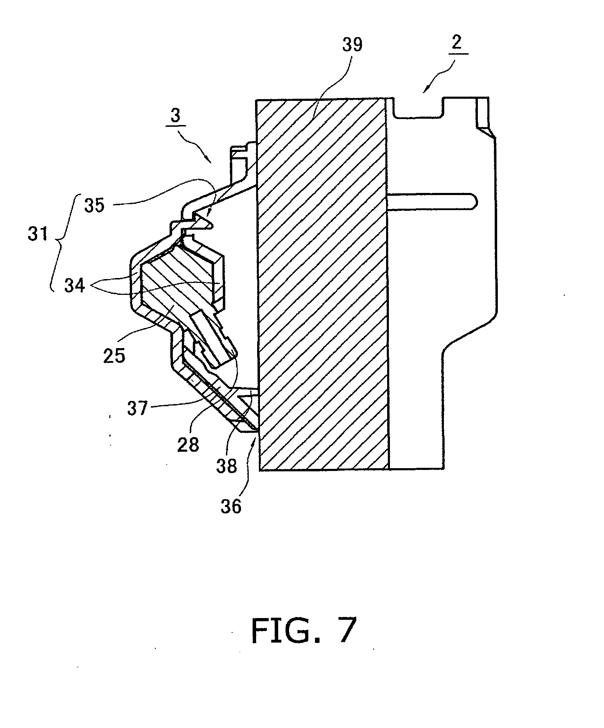

Next, the configuration and method for securing the air vent apparatus will be described using FIGS. 3 through 7. FIG. 3 is a partially cutaway front view of the heat exchanger to which the air vent apparatus is secured. FIG. 4 is a side view of the state of FIG. 3 as seen from the right. FIG. 5 is a cross-sectional view along line A-A of FIG. 3, FIG. 6 is a cross-sectional view along line B-B of FIG. 3, and FIG. 7 is a cross-sectional view along line C-C of FIG. 3.

The air vent apparatus 3 is composed of the valve 25, the capillary tube 26, and a securing implement 27, as shown in FIG. 3. The valve 25 has an external shape of a substantially hexagonal column, and has a nozzle 28 (see FIG. 7) and an operating knob 29. The valve 25 can be opened and closed by turning this operating knob 29 by hand.

As can be seen from FIGS. 3 and 4 et al., the capillary tube 26 connects the valve 25 with the top part of the outlet header 10 of the heat exchanger 2. The outlet header 10 has a linear portion 10a extending vertically, and air bubbles in the water flowing through the outlet header 10 collect in the top part of the outlet header 10. When the valve 25 is opened, air is pushed by the water pressure of the outlet header 10 into the capillary tube 26 which is connected after narrowing gradually from the top part of the outlet header 10.

The securing implement 27 has a base plate 30 formed by machining polypropylene into a plate shape, a fastener 31 provided on the front surface of the base plate 30 in order to fasten the valve 25, a pawl 32 provided to the base plate 30 in order to secure the base plate 30 to the heat exchanger 2, and a protective film 33 for protecting the capillary tube 26, as shown in FIG. 7.

The fastener 31 is composed of a clamping part 34 which is a portion for clamping the valve 25, a locking part 35 that locks so as to be able to keep the valve 25 in a clamped state by the clamping part 34, and a hinge 36 connecting the two portions of the clamping part 34 so that the clamping part 34 can be opened and closed. This fastener 31 is integrally molded from the same material as the base plate 30 made of polypropylene. The locking part 35 is composed of an opening provided to the extending portion of one of the two portions of the clamping part 34, and an insertion part having a pawl provided to the other extending portion, and locking can be achieved by inserting the insertion part through the opening and hooking the pawl on the periphery of the opening.

The fastener 31 also functions as a cover for covering the periphery of the nozzle 28 of the valve 25. In other words, when the water discharged from the nozzle 28 scatters in a direction other than in the direction of the heat exchanger 2, the water is prevented from reaching the lower portion 37 or the like of the fastener 31 and scattering to the periphery of the fastener 31.

Furthermore, a water-guiding plate 38 extends toward the heat exchanger 2 from the base plate 30. This water-guiding plate 38 is disposed so as to extend in front of the nozzle 28 of the valve 25 when the valve 25 has been fastened by the fastener 31. The water-guiding plate 38 is designed so that when the securing implement 27 is secured to the heat exchanger 2, the distal end of the water-guiding plate 38 is either in slight contact with the heat exchanger 2 or is disposed in a position facing the heat exchanger 2 across a slight gap. This type of design makes it possible for water whose force of discharge has been weakened by the water-guiding plate 38 to flow downward along the front surface of the heat exchanger 2. To achieve this, the distal end of the water-guiding plate 38 is disposed so as to be in contact with several fins 39 of the heat exchanger 2. By arranging the valve 25 in this manner, the water discharged when air is vented using the valve 25 runs along the front surfaces of the fins 39 of the heat exchanger 2, and the completion of the air venting operation can be confirmed by visually confirming this running water.

The heat exchanger 2 is a cross-fin-coil type heat exchanger. In this type of heat exchanger 2, a plurality of heat transfer tubes 40 extend parallel to each other and substantially horizontally, orthogonal to the long fins 39 extending up and down as shown in FIG. 6. The securing implement 27 is secured by the pawl 32 provided on the rear surface thereof being fitted with the heat transfer tubes 40.

The form in which the pawl 32 and the heat transfer tubes 40 fit together involves the pawl 32 being held between two heat transfer tubes 40 (the form shown in FIG. 6). In the form shown in FIG. 6, the pawl 32 readily deforms in an elastic manner due to a cleft 32a being provided to part of the pawl 32, and the pawl 32 can be configured so as to be inserted smoothly between the heat transfer tubes 40. By having a plurality of pawls 32 provided in the width direction of the heat exchanger 2 as shown in FIG. 5, the securing implement 27 can be firmly secured so as to not move. Since the base plate 30 is made of a polypropylene plate about 2 mm thick, the configuration is thin but comparatively rigid, and the base plate 30 is not readily deformed by the operation of the valve 25 so as to move away from the heat exchanger 2.

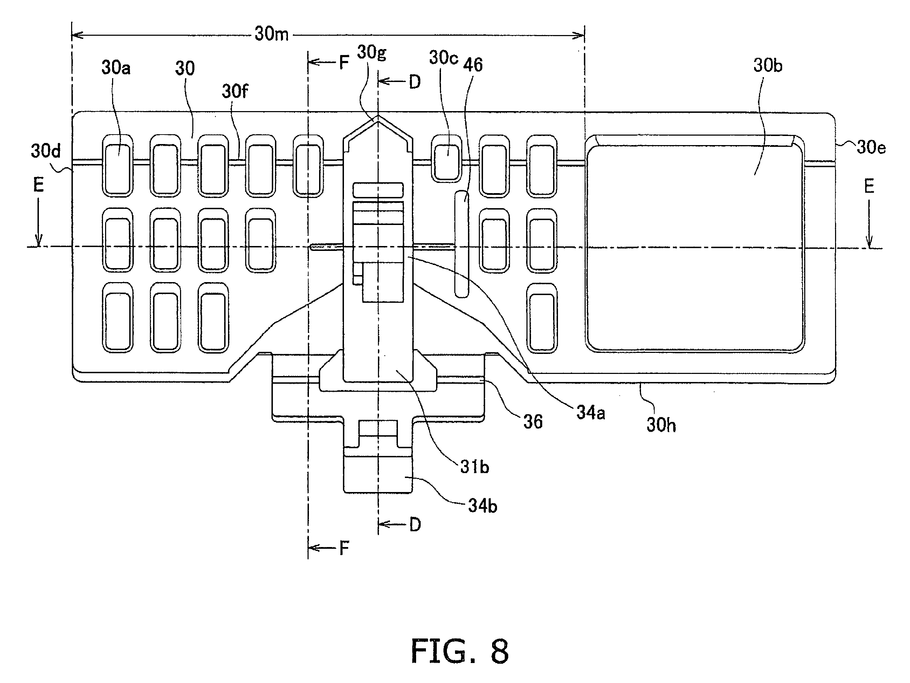

Since the valve 25 is secured to the front surface of the heat exchanger 2 by the securing implement 27, the capillary tube 26 connected to the valve 25 is disposed from the side surface of the heat exchanger 2 up to the front surface. As a result of this type of fitting of the capillary tube 26, the capillary tube 26 is bent in the periphery of the heat exchanger 2 and is pressed against the heat exchanger 2. Therefore, there is a possibility that the capillary tube 26 will be scratched by the edge of a tube plate 41 constituting the side surface of the heat exchanger 2 or by the fins 39 of the heat exchanger 2. In view of this, the protective film 33 is attached to the right side of the base plate 30 of the securing implement 27, and this protective film 33 protects the capillary tube 26 from the fins 39 and the tube plate 41, as shown in FIG. 8. Since the capillary tube 26 is disposed so as to pass through a narrow space in the side surface periphery of the heat exchanger 2, the protective film 33 is configured from a thin film of polyethylene terephthalate in order to ensure a space for fitting the capillary tube 26. The protective film 33 is formed so as to bend in a substantial L shape when seen from the top surface, and is disposed not only on the front surface of the heat exchanger 2, but on the side surface of the heat exchanger 2 as well.

The base plate 30 guards the fingers from touching the fins 39 when an operator grasps and turns the operating knob 29. Therefore, the base plate 30 spans a comparatively wide range behind the operating knob 29. A wider base plate 30 yields a greater effect of protecting the fingers of the operator. However, since the base plate 30 is positioned on the front surface of the heat exchanger 2, i.e., upstream of the air flow passing through the heat exchanger 2, the base plate 30 hinders the flow of air flowing into the heat exchanger 2, and the heat exchange efficiency of the heat exchanger 2 therefore decreases when the surface area of the base plate 30 is increased. In view of this, openings 30a, 30c not large enough to admit a finger are formed in the base plate 30, preventing the heat exchange efficiency of the heat exchanger 2 from decreasing. A large opening 30b is formed flanking the valve 25 on the opposite side from where the operating knob 29 is located because there is little likelihood of the fingers of the technician being inserted thereinto.

### <Securing implement of Air Vent Apparatus>

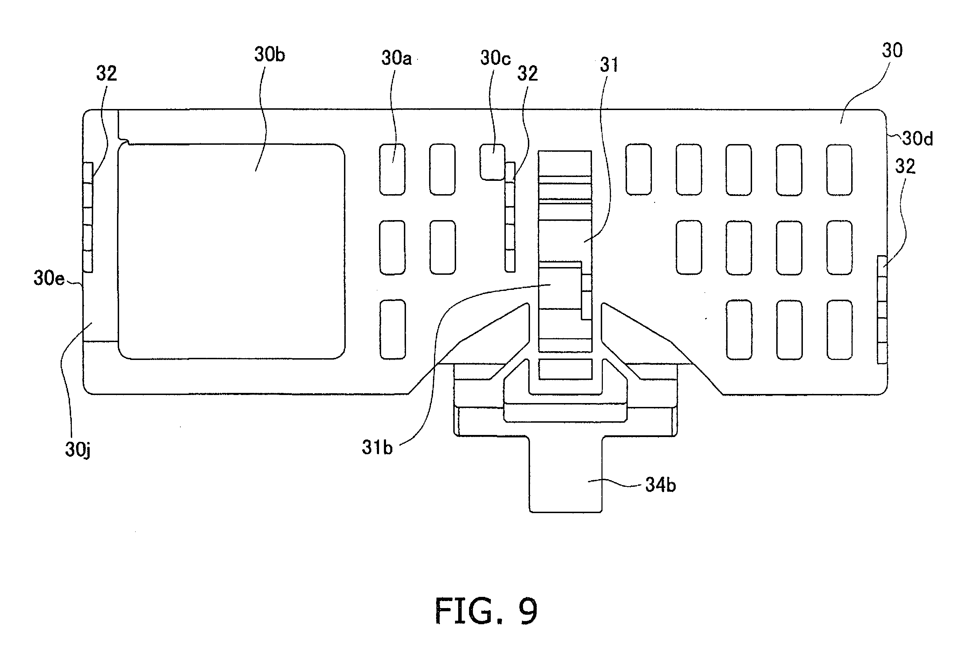

Next, the structure of the main body 27a of the securing implement 27 will be described using FIGS. 8 to 15. FIG. 8 is a front view of the main body of the securing implement, and FIG. 9 is a rear view of the main body. The securing implement 27 is composed of the main body 27a which includes the base plate 30 made of polypropylene, the fastener 31, and the pawl 32; and an attachment 27b which includes the protective film 33 made of polyethylene terephthalate.

As seen in a front view, the base plate 30 has a plurality of large and small openings 30a, 30b formed in a substantially rectangular plate having a width of approximately 160 mm and a height of approximately 55 mm. A secured-side member 34a of the clamping part 34 of the fastener 31 is disposed in the widthwise substantial center of the base plate 30. The clamping part 34 is composed of two portions, the secured-side member 34a and a turning-side member 34b, and these portions are connected by the hinge 36. Since the material of the main body 27a of the securing implement 27 is polypropylene, the hinge 36 is formed by providing a thin portion during the molding of the main body 27a. A thin-walled region 30j is also provided along an end edge 30E. The protective film 33 is attached to this thin-walled region 30j.

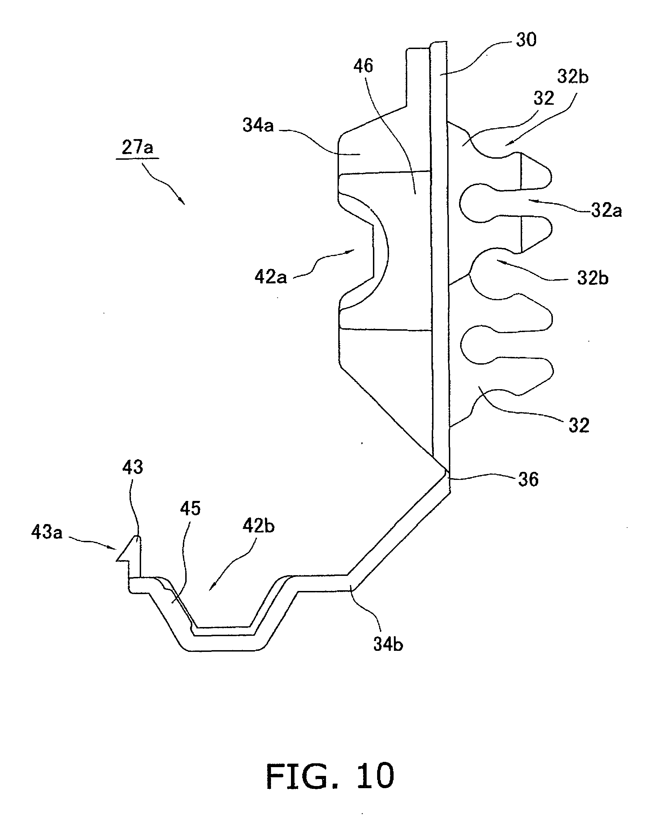

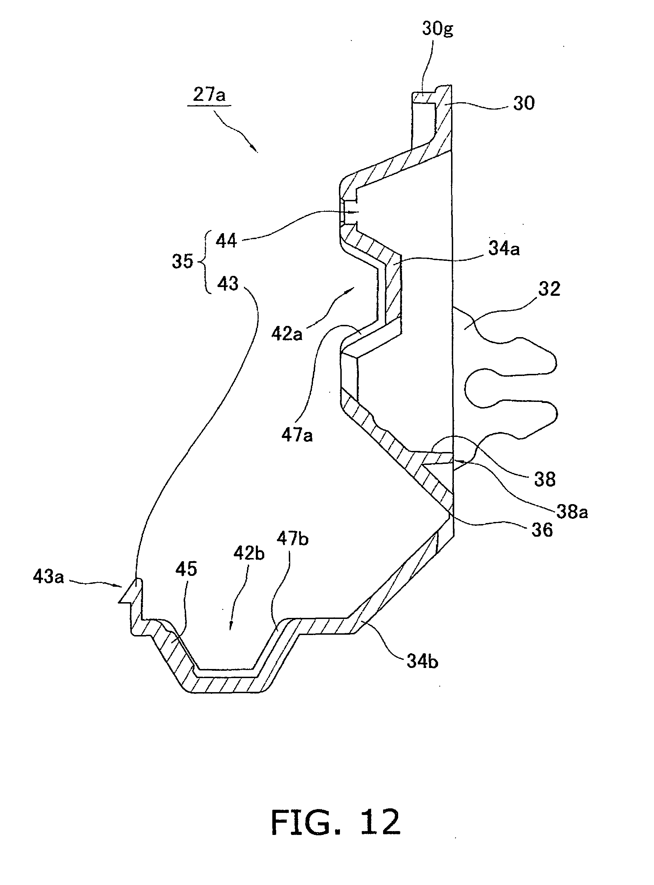

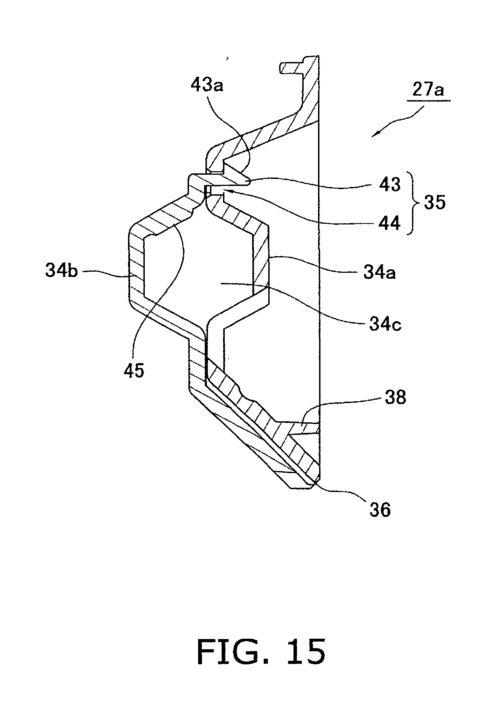

FIG. 10 is a right-side view of the main body 27a of the securing implement 27. Concave parts 42a, 42b of the secured-side member 34a and the turning-side member 34b have the shape of a hexagon divided in two as shown in FIG. 10, and when these two concave parts 42a, 42b are brought together, a space having a substantially hexagonal cross section is formed (see FIG. 15). At the point where the valve 25 narrows, ribs 47a, 47b shown in FIG. 12 fit in and secure the valve 25 so that the valve 25 does not come loose. To fasten the valve 25, the turning-side member 34b is rotated upward about the hinge 36 as an axis of rotation. FIG. 12 is a cross-sectional view along line D-D in FIG. 8. An insertion part 43 and an opening 44 shown in FIG. 12 constitute the locking part 35. A pawl 43a is attached to the insertion part 43, and when the turning-side member 34b rotates and the insertion part 43 is inserted into the opening 44, the pawl 43a is brought in contact with the top part of the opening 44 and inserted therethrough while being pressed against the bottom side. Therefore, when the insertion part has been fully inserted, the pawl 43a locks on the opening 44 and the turning-side member 34b of the clamping part 34 is secured in place.

A bulge 45 is formed in the concave part 42b as shown in FIG. 12. Because of this bulge 45, the surface area of the space 34c, which is formed by joining together the two concave parts 42a, 42b and which has a hexagonal cross section, is smaller than the surface area of the cross section of the valve 25. When the valve 25 is clamped in such a relationship, the bulge 45 is pressed by the valve 25 and the turning-side member 34b of the clamping part 34 is lifted upward. The force by which the pawl 43a is caught in the opening 44 thereby increases, and the operator cannot remove the pawl 43a easily. It is thereby possible to prevent an adverse event in which the fastener 31 is displaced when the operator turns the operating knob 29. The valve 25 is also supported by a support plate 46 separated slightly from the fastener 31 so that the fastener 31 does not readily come out even if a twisting force acts on the valve 25 when the operating knob 29 is turned.

When air venting is performed, the operator turns the operating knob 29 by hand. Since the operating knob 29 is part of the valve 25, the distance between the operating knob 29 and the fins 39 of the heat exchanger 2 decreases when the valve 25 is secured to the heat exchanger 2. Therefore, there is a possibility that the operator's fingers will be scratched by the fins 39 during the air venting operation. To prevent such a danger, the base plate 30 has a comparatively large protective area between the operating knob 29 and the fins 39 of the heat exchanger 2. If an operator is concerned that the fastener 31 might come out when the operating knob 29 is turned, the operator could also push the fastener 31 by hand. Therefore, the base plate 30 has a protective guard area 30m around the periphery of the fastener 31 even in the area where the operating knob 29 is not disposed.

However, when part of the heat exchanger 2 is blocked by the base plate 30, the heat exchange efficiency is reduced. Therefore, the protective guard area 30m of the base plate 30 is provided with openings 30a, 30c which allow air to pass through but do not allow fingers to pass through. The opening 30a is formed in the periphery of the valve 25, and is a small rectangular hole having a width of 5 mm and a height of 10 mm, for example. If the size of the opening 30a is as previously described, there is little chance of the fingers of an average adult passing through the opening 30a, and since the thickness of the base plate 30 is about 2 mm, for example, the operator need not give any thought to being injured unless the operator performs an unusual action such as intentionally pressing their fingers in the opening 30a. The opening 30c is even smaller than the opening 30a.

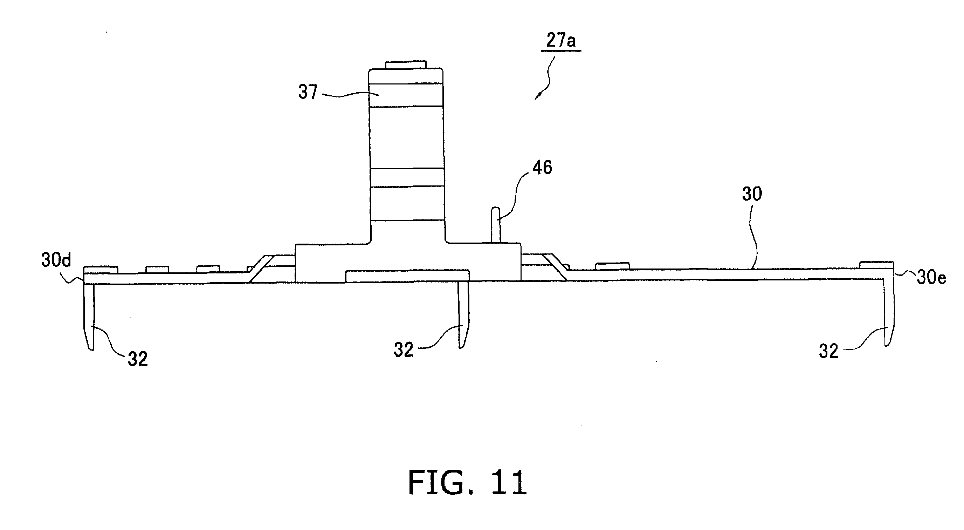

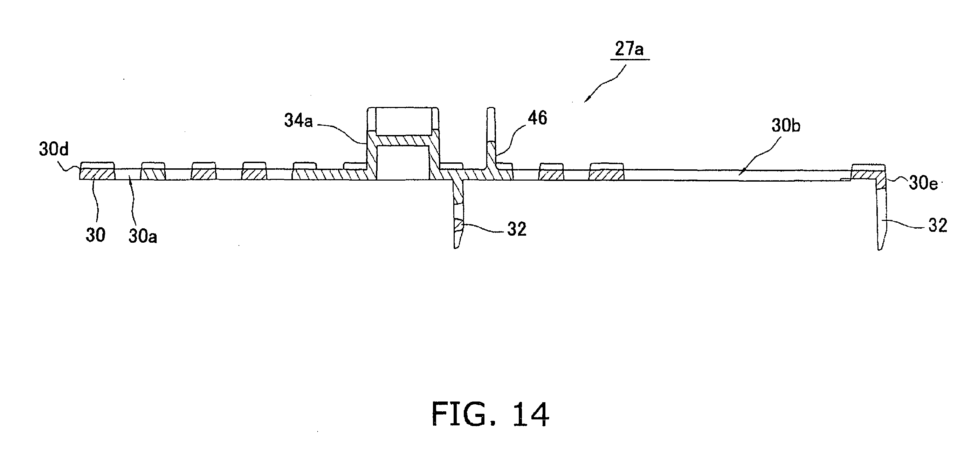

A large opening 30b is formed in an area where the operator's fingers do not reach when performing air venting. When pawls 32 are disposed at one end edge 30d and the other end edge 30e in the width direction of the base plate 30 as shown in FIGS. 11 and 14, the base plate 30 readily flexes forward due to the force whereby the center of the base plate 30 is pulled to the front of the heat exchanger 2. In view of this, a pawl 32 is also disposed on the back side of the fastener 31 as shown in FIGS. 11 and 14. The pawl 32 on the back side of the fastener 31 prevents the base plate 30 from rising up off the front surface of the heat exchanger 2.

The pawls 32 are also formed at different heights in the vertical direction, as is clear from FIG. 10. When three pawls 32 are disposed in alignment at the same height, it is easier for three pawls 32 to rotate about an axis of a straight line joining the pawls. The pawls 32 are disposed as staggered in the vertical direction in order to prevent the securing implement 27 from being readily pulled out by this force in the rotational direction.

The pawls 32 lock on the heat transfer tubes 40, as has already been described. Therefore, recessed portions 32b are formed in the edges of the pawls 32. Two heat transfer tubes 40 fit into the recessed portions 32b, whereby the securing implement 27 is secured to the front surface of the heat exchanger 2. The strength by which the pawls 32 fit with the heat transfer tubes 40 is adjusted by the cleft 32a so as not to be too firm. What secures the securing implement 27 in place is the three pawls 32 and the back surface of the base plate 30 being in contact with the heat transfer tubes 40 and fins 39 of the heat exchanger 2.

In the secured-side member 34a of the fastener 31 as shown in FIGS. 10 and 12, the one of the three inner surfaces of the concave part 42a that is parallel to the base plate 30 is set apart from the base plate 30. The reason for such a structure is to direct the nozzle 28 of the valve 25 in the direction of the heat exchanger 2 but to prevent the nozzle 28 from coming in contact with the fins 39 of the heat exchanger 2 even when the valve 25 is fastened by the fastener 31. The nozzle 28 discharges water from the opening 31b of the fastener 31 (see FIGS. 9 and 12) toward the side of the heat exchanger 2. The nozzle 28 is not pointed horizontally toward the heat exchanger 2, but is inclined downward by about 60 degrees, for example, from the horizontal direction pointing at the heat exchanger 2. Therefore, the water-guiding plate 38 is positioned on the front surface of the nozzle 28. The water-guiding plate 38 is disposed horizontally in the state of the securing implement 27 being attached to the heat exchanger 2, and the top surface of the water-guiding plate 38 is angled at approximately 120 degrees, for example, in relation to a line extended from the nozzle 28. Therefore, water discharged from the nozzle 28 of the valve 25 strikes the water-guiding plate 38 and loses some of its discharge force, but this force causes the water to flow from the water-guiding plate 38 toward the front surface of the heat exchanger 2.

The angle of the water-guiding plate 38 does not necessarily need to be horizontal. Whether the distal end 38a of the water-guiding plate 38 is pointed slightly upward or downward, the water is preferably led to the heat exchanger 2. The angle of the nozzle 28 is not limited to the angle described above, and is preferably directed toward the heat exchanger 2. The nozzle 28 is easily handled when pointed downward, however, because it is not preferable for the water exiting the nozzle 28 to return to the valve 25.

The distal end 38a of the water-guiding plate 38 is in contact with the fins 39 of the heat exchanger 2. The water led to the distal end 38a of the water-guiding plate 38 has its discharge force weakened by the water-guiding plate 38, and the water therefore flows down over the front surfaces of the fins 39 into the lower drain pan 19a without going through the heat exchanger 2. Thus, since the fins 39 fulfill the role of a hose, the hose can be omitted in the air vent apparatus 3 attached to the front surface of the heat exchanger 2. Since the water travels along the front surfaces of the fins 39, it is possible to confirm whether or not there is a discharge of exiting water after air has been vented, and it is possible to easily confirm that air has been vented in the air venting operation.

Since the base plate 30 is attached to the front surface of the heat exchanger 2, there is a risk that condensed water formed on the heat exchanger 2 will travel along the front surface of the base plate 30 and the condensed water will scatter. To prevent such adverse events, ribs 30f, 30g, as shown in FIGS. 8 and 12, are formed from one end edge 30d to the other end edge 30e. These intermittent horizontal ribs 30f and peaked ribs 30g are a result of the shapes of the openings 30a, 30b, 30c and the fastener 31. These ribs 30f, 30g prevent some of the condensed water formed on the fins 39 of the heat exchanger 2 and other components from flowing forcefully over the front surface of the base plate 30 and dripping down from the base plate 30 so as to splash. When the condensed water flows past the ribs 30f, the speed at which the condensed water heads downward is reduced. The condensed water thereby collects at the bottom end edge 30h of the base plate 30, and the condensed water again builds up to the fins 39 due to the surface tension of the collected condensed water. Since the fastener 31 projects from the base plate 30, the condensed water readily splashes when flowing over the top of the fastener 31. In view whereof, peaked ribs 30g are provided above the fastener 31, the condensed water is diverted to the left and right from the position of the fastener 31 by the ribs 30g, and the condensed water does not flow over the top of the fastener 31.

Thus, it is required that the ribs 30f, 30g be formed in the entire space between the one end edge 30d and the other end edge 30e of the base plate 30. However, the condensed water cannot get past the openings 30a, 30b, 30c, and the ribs 30f stop at the openings 30a, 30b, 30c. These ribs 30f, 30g are formed so as to project about several millimeters from the surface of the base plate 30. It has been found through experimentation that the position where the ribs 30f are formed is preferably higher than the vertical center.

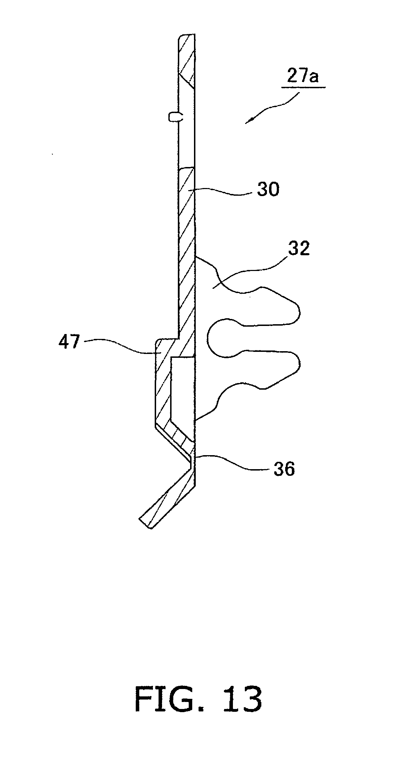

FIG. 13 is a cross-sectional view along line F-F in FIG. 8. A lower part of the base plate 30 sticks out further as shown in FIG. 13. When an irregularity is formed in the base plate 30 in this manner, the rigidity of the base plate 30 increases and the base plate 30 is stronger against bending stress. The base plate 30 is thereby prevented from being deformed by bending stress applied to the base plate 30 at times such as when the turning-side member 34b of the fastener 31 bends about the hinge 36 as an axis or when the operating knob 29 is turned.

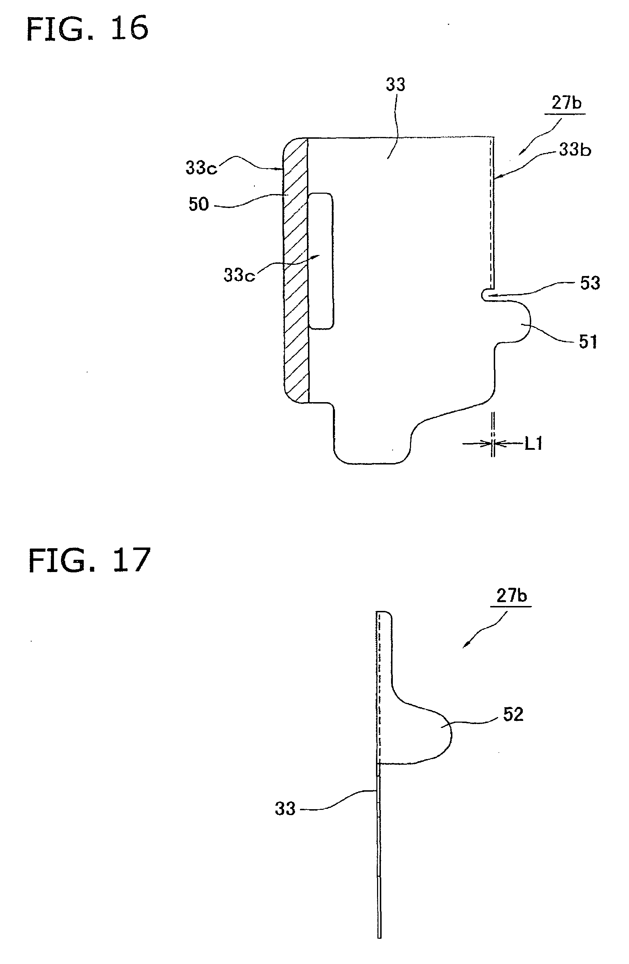

Next, the attachment 27b will be described using FIGS. 16 and 17. The attachment 27b is configured such that an adhesive material 50 is formed on the molded protective film 33. The adhesive material 50 is formed at a specified width along one lengthwise edge 33a of the substantially rectangular protective film 33. The protective film 33 and the adhesive material 50 can be molded by attaching double-sided tape at predetermined positions, for example, and perforating the protective film 33 together with the double-sided tape by Thompson processing. An opening 33c for positioning is also formed at the same time by perforating.

An protrusion part 51 is formed in a location near the middle in the other lengthwise edge 33b opposite the lengthwise edge 33a. A folded part 52 provided above the protrusion part 51 is separated from the protrusion part 51 by a notch 53. The folded part 52 is formed by folding perpendicularly at the lengthwise edge 33b. The back surface of the folded part 52 is set on the front surface of the tube plate 41. When the securing implement 27 is attached to the heat exchanger 2, the protrusion part 51 is pulled until the folded part 52 forms a right angle while the folded part 52 is in a state of contact with the tube plate 41. When this manner of attachment method is used, the securing implement 27 is secured in place at an appropriate position whose reference is the right surface of the heat exchanger 2.

The lengthwise edge 33b of the protective film 33 extends farther out than the back surface of the folded part 52 by a length L1 of about 0.5 mm, for example. In other words, even when the securing implement 27 has been attached, the lengthwise edge 33b of the protective film 33 extends farther out than the corner of the tube plate 41 by the length L1, and there must therefore be a protective film 33 between the capillary tube 26 and the corner of the tube plate 41. Due to the presence of the protective film 33 on the corner of the tube plate 41, the capillary tube 26 is prevented from being scratched by the corner of the tube plate 41.

Since the protective film 33 is configured from a thin material of about 0.5 mm, for example, even in cases in which the gaps between the components disposed on the front surface side of the heat exchanger 2 and the front surface of the heat exchanger 2 are the same small size as in conventional practice, the capillary tube 26 can be drawn to the front surface of the heat exchanger 2 if the gap is slightly larger than the diameter of the capillary tube 26.

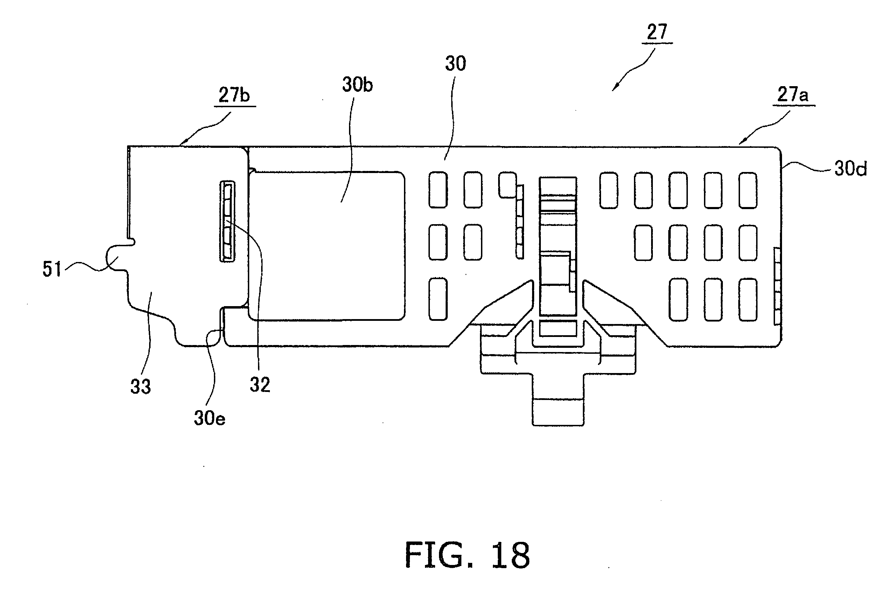

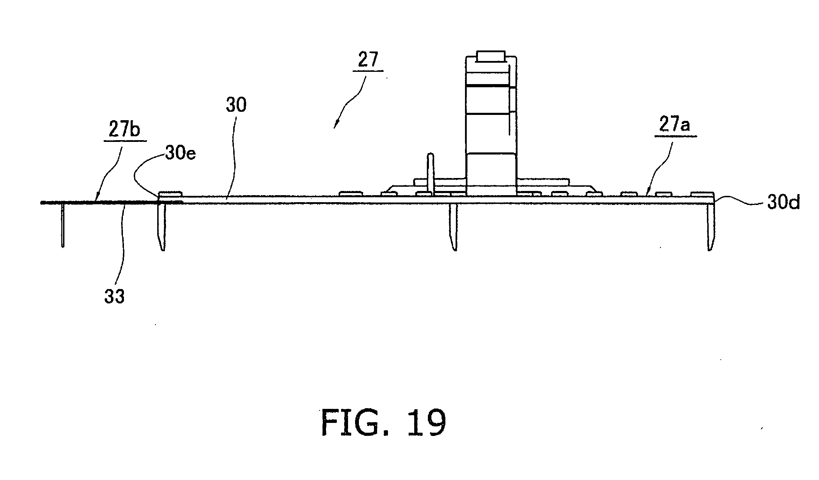

FIGS. 18 and 19 show a state in which the attachment 27b has been attached to the main body 27a. FIG. 18 is a rear side view of the securing implement 27, and FIG. 19 is a plan view of the securing implement 27. The protective film 33 is attached to the thin-walled region 30j of the base plate 30 (see FIG. 9). Since the protective film 33 is secured to the thin-walled region 30j, the back surface of the securing implement 27 is coplanar with the back surface of the base plate 30 and the protective film 33 even if the protective film 33 is thick. Therefore, the entire back side of the securing implement 27 including the protective film 33 and the back surface of the base plate 30 can be brought in contact with the fins 39. The protective film 33 is positioned relative to the base plate 30 by fitting a pawl 32 into the opening 33c. Because of this pawl 32, the protective film does not come off even if the protective film 33 is pulled with the protrusion part 51.

### <Modifications>

(1) In the embodiment described above, a convector was given as an example of the heat exchange unit in which air venting is performed, but the heat exchange unit as the object of application is not limited to a convector; the present invention can also be applied to venting air in a medium of another air-conditioning apparatus housing a heat exchanger.
(2) In the embodiment described above, a case was described in which water was used as the medium for carrying heat, but the medium used in the present invention is not limited to water; for example, oil or another medium may be used.
(3) In the embodiment described above, the description used a removable intake grill 14 and air filter 13 as an example of a maintenance opening structure, but the maintenance opening structure is not limited to the combination of a removable intake grill and air filter. For example, a structure may be used in which a flap is provided to part of the intake grill and air filter, and the openings 24 facing the front surface of the heat exchanger 2 are exposed by opening the flap.
(4) In the embodiment described above, the fastener 31 for clamping the valve 25 was used as a holding part for holding the valve 25, but the holding part of the valve 25 is not limited to a structure such as the fastener 31. For example, a screw hole can be provided in the valve 25, and a structure in which the valve 25 is screwed in place can be used. A fitting part for fitting with the heat exchanger 2 can also be formed in the external shape of the valve 25 itself. The location where the valve 25 is secured has a simple and superior assembly for fitting with the heat exchanger 2, but the valve 25 does not necessarily need to be secured to the heat transfer tubes 40 of the heat exchanger 2 by pawls 32; the valve can be disposed on the front surface of the heat exchanger 2 by being secured to a component in the periphery of the heat exchanger 2.
(5) In the embodiment described above, the valve 25 and the nozzle 28 are formed integrally, but they may also be configured as separate members. For example, a configuration can be used in which the valve 25 and the nozzle 28 are separated and connected to each other by a tube.
(6) In the embodiment described above, the force of the water is weakened by the water discharged from the nozzle 28 striking the water-guiding plate 38. In other words, the water-guiding plate 38 functions as a force reducer, but the force reducer does not necessarily need to be a plate-shaped member. For example, something such as a twisting pipe or a bundle of thin plastic fibers may be used.
(7) In the embodiment described above, the securing implement 27 is configured by combining the main body 27a and the attachment 27b which are separate members, but these members can also be molded integrally, for example. On the other hand, the base plate 30, the fastener 31, the pawls 32, and other components of the main body 27a of the securing implement 27 are molded integrally, but they can also be configured as separate members. However, the method for creating the main body 27a by integrated plastic molding and the method for creating the main body 27a and the attachment 27b by integrated plastic molding are inexpensive and economically advantageous.

### <Characteristics>

### (a)

The convector 1 (heat exchange unit) comprises the air vent apparatus 3 for venting air entering the circulation passage of the heat exchanger 2. The air vent apparatus 3 is attached to the front surface of the heat exchanger 2. In the convector 1, the openings 24 of the front surface grill 12 on the front surface of the heat exchanger 2 can be exposed during maintenance of the heat exchanger 2 in order to perform maintenance on the heat exchanger 2. The operating knob 29 of the valve 25 of the air vent apparatus 3 can be turned through the openings 24 to perform air venting.

The openings 24 of the front surface grill 12 can be exposed by removing the intake grill 14 and the air filter 13 which are attached to the convector 1 so as to be removable. In other words, the intake grill 14 and the air filter 13 capable of being removed constitute a maintenance opening structure. The maintenance opening structure herein is preferably one in which the opening in the front surface of the heat exchanger 2 is exposed in order to perform maintenance on the heat exchanger 2, and the structure does not necessarily need to be removable. This maintenance opening structure is contained in a casing that includes the front surface grill 12 to which the intake grill 14 and air filter 13 are attached.

Thus, by having the valve 25 of the air vent apparatus 3 located on the front surface of the heat exchanger 2, the valve 25 is easily exposed in order to perform the air venting operation. On the other hand, when the air venting operation is not being performed, adverse events of the valve 25 being mistakenly opened can be prevented because the valve 25 is covered by the intake grill 14 and the air filter 13.

Since the air vent apparatus 3 branches off from the circulation passage as shown in FIG. 1, the water in the capillary tube 26 of the air vent apparatus 3 is not circulated, the effect of the air vent apparatus 3 being cooled by the water is therefore small, and there is no condensation. When the air vent apparatus 3 is disposed on the front surface of the heat exchanger 2, indoor air is constantly blowing over the air vent apparatus 3 and acting so as to dry the air vent apparatus 3, and the air vent apparatus 3 therefore has a configuration even more resistant to condensation.

There is no condensation on the valve 25 of the air vent apparatus 3 or on the securing implement 27 itself, but since there is condensation on the heat exchanger 2, the condensed water sometimes flows down from the heat exchanger 2 onto the air vent apparatus 3. The ribs 30f, 30g are provided in order to ensure that the condensed water flowing down to the base plate 30 of the securing implement 27 from the heat exchanger 2 does not scatter. The ribs 30f, 30g are cut off at the locations of the openings 30a, 30b, 30c and other obstacles, but are disposed so as to extend from one of the end edges 30d, 30e to the other, which face each other horizontally. This is because water that passes over the front surface of the base plate 30 must make contact with the ribs 30f, 30g.

### (b)

The fastener 31 (holding part) of the securing implement 27 holds the nozzle 28 of the valve 25 in a direction pointing toward the heat exchanger 2. Therefore, when the air venting operation is performed, water exiting the nozzle 28 is discharged onto the heat exchanger 2. The water flows over the fins 39 of the heat exchanger 2 and is led to the drain pan 19a. With this type of configuration, water is led to the drain pan 19a without a hose leading from the nozzle 28 to the drain pan 19a. The hose can be omitted by using this type of configuration.

Since the hose is omitted and the tip of the nozzle 28 is opened, it is thus possible for water exiting the nozzle 28 to drip down from the nozzle 28. In view whereof, the water-guiding plate 38 is provided to the securing implement 27, and the water discharged from the nozzle 28 is led to the fins 39 of the heat exchanger 2 by the water-guiding plate 38. Thus, the nozzle 28 is secured in place in a position whereby the flow of water exiting the nozzle 28 can reach the heat exchanger 2.

Since the capillary tube 26 of the air vent apparatus 3 is connected to the outlet header 10 of the heat exchanger 2, the water in the capillary tube 26 is subjected to pressure for circulating the water. When the valve 25 is opened in such a state, water is forcefully expelled out of the nozzle 28. Therefore, merely by having the nozzle 28 directed toward the heat exchanger 2, water exiting the nozzle 28 can penetrate, and manage to enter the back surface of, the heat exchanger 2.

The water-guiding plate 38 is disposed in a direction facing the nozzle 28 so that the water does not penetrate the heat exchanger 2. In this case, the water-guiding plate 38 functions as a force reducer, serving to weaken the force of the water exiting the nozzle 28. Thus, by having the force of the water weakened and the water exiting the nozzle 28 directed to the front surface of the heat exchanger 2, the water flows over the front surface of the heat exchanger 2. Since an operation is performed for draining water from the openings 24 in the front surface of the heat exchanger 2, the operator can visually confirm the water flowing over the front surface of the heat exchanger 2 in this manner and can confirm that the water draining operation has ended by visually confirming the water flowing over the heat exchanger 2.

### (c)

In a state in which the securing implement 27 of the air vent apparatus 3 holds the valve 25 in the fastener 31 (holding part), the nozzle 28 is covered by the fastener 31 except for the portion in the direction in which the distal end of the nozzle 28 points. In other words, the fastener 31 fulfills the role of a cover. Water (the medium) can thereby be prevented from getting on the body, hands, or feet of the operator during the operation.

In the fastener 31, the clamping part 34 clamps the valve 25, but the fastener 31 is caught by the locking part 35 in order to maintain the clamped state. The clamping part 34 attempts to clamp the valve 25 over a smaller surface area than the cross-sectional surface area of the valve 25 because of the bulge 45. Therefore, the turning-side member 34b is raised upward, the force by which the pawl 43a is caught in the locking part 35 is maximized, the resistance against the pulling force increases, and it is therefore possible to prevent the hold of the fastener 31 (holding part) from being released by the operator opening and closing the valve.

### (d)

The securing implement 27 is secured to the heat transfer tubes 40 of the heat exchanger 2 by three pawls 32 (fitting parts). Each of the pawls 32 is insertably fitted between two heat transfer tubes 40. Since the securing implement 27 is secured in place by the pawls 32 alone, the configuration of the securing implement 27 is extremely simple. Therefore, the pawls 32 can be created together with the other portions of the main body 27a of the securing implement 27 by plastic integrated molding, and it is possible to provide the securing implement 27 having fitting parts at low cost. Merely having the pawls 32 fitted simplifies the operation, and facilitates the securing task of the securing implement 27.

Each of the pawls 32 herein is fitted in between two heat transfer tubes 40, but the fitting can also be accomplished by pawls that clamp one heat transfer tube 40. One heat transfer tube 40 may be inserted in a cleft 32a of a pawl having a shape such as that of the pawls 32, a portion 32b recessed in the edge may be inserted between two heat transfer tubes on both side and secured in place to three heat transfer tubes 40, and the number of heat transfer tubes 40 fitted with one pawl can be selected appropriately. Although operability would suffer, another possibility is to clamp and fasten the heat transfer tubes with something having a different shape than the pawls; e.g., something with a shape such as that of the fastener 31.

### (e)

The operating knob 29 is turned to open and close the valve 25. The securing implement 27 has a guard area 30m where the base plate 30 extends around the periphery of the operating knob 29. The openings 30a, 30c in the guard area 30m are too small for fingers to fit through. Therefore, the guard area 30m prevents fingers from being scratched by the fins 39 of the heat exchanger 2. The openings 30a, 30c allow air to pass through to the heat exchanger 2 and therefore have the effect of preventing a decrease in heat exchange efficiency in the heat exchanger 2. The guard area 30m also extends in the periphery of the fastener 31 and can also protect fingers holding the fastener 31.

### (f)

The valve 25 and the outlet header 10 of the circulation passage of the heat exchanger 2 are connected by the capillary tube 26. Since the outlet header 10 is disposed on the side surface of the heat exchanger 2 and the valve 25 is disposed on the front surface of the heat exchanger, the capillary tube 26 is drawn around the heat exchanger 2 from the side surface to the front surface. Because the capillary tube 26 is arranged in this manner, the protective film 33 is disposed between the capillary tube 26 and the heat exchanger 2.

The protective film 33 fulfills the role of protecting the capillary tube 26 so that the capillary tube 26 is not scratched by the fins 39 or the tube plate 41 of the heat exchanger 2. The reason the protective film 33 is configured from a material thinner than the base plate 30 of the securing implement 27 is because there is only a small space in the peripheral edge of the side surface of the heat exchanger 2 and it is therefore difficult to place a thick member such as the base plate 30.

### REFERENCE SIGNS LIST

- 1: convector (heat exchange unit)
- 2: heat exchanger
- 3: air vent apparatus
- 12: front surface grill
- 13: air filter
- 14: intake grill
- 25: valve
- 26: capillary tube
- 27: securing implement
- 28: nozzle
- 29: operating knob
- 31: fastener (holding part)
- 32: pawl (fitting part)
- 33: protective film
- 34: clamping part
- 35: locking part
- 38: water-guiding plate (force reducer)

### CITATION LIST

### PATENT LITERATURE

<Patent Literature 1> Japanese Unexamined Utility Model Application Publication No. 2-77511

## Claims

1. A heat exchange unit (1) for performing heat exchange between air and a medium circulating through a circulation passage, the heat exchange unit comprising:
a heat exchanger (2) connectable to the circulation passage;
a casing (12, 13, 14) for covering a front surface of the heat exchanger, the casing having a maintenance opening structure (13, 14) for exposing an opening (24) in the front surface of the heat exchanger during maintenance; and
an air vent apparatus for venting air entering the circulation passage of the heat exchanger (2), the air vent apparatus comprising a valve (25) connected to the circulation passage and having a nozzle (28) for venting air; and
a securing implement (27) for securing the valve to a front surface of the heat exchanger that draws in air, the securing implement comprising a base plate (30) ; **characterised in that**
a holding part (31) is provided to a front surface of the base plate holding the air vent apparatus in the front surface of the base plate so that the nozzle of the air vent apparatus is oriented toward the heat exchanger, wherein the valve (25) is disposed in the front surface of the heat exchanger facing the opening of the casing.

2. The heat exchange unit according to claim 1, wherein
the securing implement further has, in front of the nozzle, a force reducer (38) for weakening the force of the medium discharged from the nozzle of the valve.

3. The heat exchanger unit according to any one of claims 1 through 2, wherein
the heat exchanger has a heat transfer tube (40) for causing the medium to flow through the interior, whereby the heat of the medium is transmitted; and
the securing implement further has a fitting part (32) that fits with the heat transfer tube of the heat exchanger in order to secure the securing implement to the heat exchanger, the fitting part being preferably provided to a rear surface of the base plate.

4. The heat exchange unit according to anyone of claims 1 through 3, wherein
the valve has an operating knob (29) for opening and closing the valve; and
the base plate (30) has a guard region which extends in the space between the operating knob and the heat exchanger in a state in which the valve is held in the holding part.

5. The heat exchange unit according to anyone of claims 1 through 4, further comprising:
a tube (26) connecting the circulation passage and the valve; wherein
the securing implement further has a protective film (33) for protecting the tube from the heat exchanger, the protective film being disposed between the tube and the heat exchanger.

6. The heat exchange unit according to any one of claims 1 through 2, wherein
the securing implement further has a cover (31) for covering a periphery of the nozzle of the valve in a state in which the valve is held in the holding part.

7. The heat exchange unit according to claim 1, wherein
the holding part has a clamping part (34) for clamping the valve, a locking part (35) for immobilizing the clamping part in order to keep the valve in a state of being clamped by the clamping part, and a valve-clamping area; and
the valve-clamping area formed when the clamping part is immobilized by the locking part includes a portion smaller than the external shape of the valve.

8. The heat exchange unit according to anyone of claims 1 through 7, wherein
the securing implement secures the nozzle in place at a position where the medium discharged from the nozzle flows over the front surface of the heat exchanger.

9. The heat exchange unit according any one of claims 1 through 8, wherein
the base plate has on a front surface a rib (30f) extending from one end edge (30d) to another end edge (30e) that face each other horizontally.

## Patentansprüche

1. Wärmetauscheinheit (1) zum Durchführen eines Wärmeaustauschs zwischen Luft und einem Medium, das durch einen Zirkulationskanal zirkuliert, wobei die Wärmetauscheinheit aufweist:
einen Wärmetauscher (2), der mit dem Zirkulationskanal verbindbar ist;
ein Gehäuse (12, 13, 14) zum Abdecken einer Vorderfläche des Wärmetauschers, wobei das Gehäuse eine Wartungsöffnungsstruktur (13, 14) zum Freilegen einer Öffnung (24) in der Vorderfläche des Wärmetauschers während der Wartung, aufweist; und
eine Entlüftungsvorrichtung zum Entlüften von Luft, die in den Zirkulationskanal des Wärmetauschers (2) eintritt, wobei die Entlüftungsvorrichtung ein Ventil (25) aufweist, das mit dem Zirkulationskanal verbunden ist und eine Düse (28) zum Entlüften von Luft aufweist, und
ein Sicherungsgerät (27) zum Sichern des Ventils an einer Vorderfläche des Wärmetauschers, die Luft einzieht, wobei das Sicherungsgerät eine Grundplatte (30) aufweist,
**dadurch gekennzeichnet, dass**
ein Halteteil (31) an einer Vorderfläche der Grundplatte vorgesehen ist und die Entlüftungsvorrichtung so an der Vorderfläche der Grundplatte hält, dass die Düse der Entlüftungsvorrichtung zu dem Wärmetauscher hin gerichtet ist, wobei das Ventil (25) an der Vorderfläche des Wärmetauchers, der Öffnung des Gehäuses zugewandt, angeordnet ist.

2. Wärmetauscheinheit nach Anspruch 1, wobei
das Sicherungsgerät ferner, vor der Düse, einen Kraftminderer (38) zum Schwächen der Kraft des Mediums, welches aus der Düse des Ventils ausgestoßen wird, aufweist.

3. Wärmetauscheinheit nach einem der Ansprüche 1 bis 2, wobei
der Wärmetauscher ein Wärmeübertragungsrohr (40) zum Bewirken, dass das Medium durch das Innere strömt, wodurch die Wärme des Mediums übertragen wird, aufweist; und
das Sicherungsgerät ferner ein Passstück (32) aufweist, das mit dem Wärmeübertragungsrohr des Wärmetauschers zusammenpasst, um das Sicherungsgerät an dem Wärmetauscher zu sichern, wobei das Passstück bevorzugt an einer Rückfläche der Grundplatte vorgesehen ist.

4. Wärmetauscheinheit nach einem der Ansprüche 1 bis 3, wobei
das Ventil einen Betätigungsknopf (29) zum Öffnen und Schließen des Ventils aufweist; und
die Grundplatte (30) einen Schutzbereich aufweist, der sich in dem Raum zwischen dem Betätigungsknopf und dem Wärmetauscher in einem Zustand in dem das Ventil in dem Halteteil gehalten ist, erstreckt.

5. Wärmetauscheinheit nach einem der Ansprüche 1 bis 4, ferner mit:
einem Rohr (26), das den Zirkulationskanal und das Ventil verbindet; wobei
das Sicherungsgerät ferner einen Schutzfilm (33) zum Schützen der Rohrs vor dem Wärmetauscher, aufweist, wobei der Schutzfilm zwischen dem Rohr und dem Wärmetauscher angeordnet ist.

6. Wärmetauscheinheit nach einem der Ansprüche 1 bis 2, wobei
das Sicherungsgerät ferner eine Abdeckung (31) zum Abdecken eines Umfangs der Düse des Ventils in einem Zustand in dem das Ventil in dem Halteteil gehalten ist, aufweist.

7. Wärmetauscheinheit nach Anspruch 1, wobei
das Halteteil einen Klemmteil (34) zum Klemmen des Ventils, einen Verriegelungsteil (35) zum Immobilisieren des Klemmteils, um das Ventil in einem durch das Klemmteil geklemmten Zustand zu halten und einen Ventilklemmbereich aufweist; und
der Ventilklemmbereich, der ausgebildet wird, wenn der Klemmteil durch den Verriegelungsteil immobilisiert wird, einen Abschnitt aufweist, der kleiner ist als die äußere Form des Ventils.

8. Wärmetauscheinheit nach einem der Ansprüche 1 bis 7, wobei
das Sicherungsgerät die Düse an einem Ort an einer Position an der das von der Düse ausgestoßene Medium über die Vorderfläche des Wärmetauschers strömt, sichert.

9. Wärmetauscheinheit nach einem der Ansprüche 1 bis 8, wobei
die Grundplatte an einer Vorderfläche eine Rippe (30f) aufweist, die sich von einer Endkante (30d) zu einer anderen Endkante (30e), die einander horizontal zugewandt sind, erstreckt.

## Revendications

1. Unité d'échange de chaleur (1) servant à effectuer un échange de chaleur entre de l'air et un milieu circulant à travers un passage de circulation, l'unité d'échange de chaleur comprenant :
un échangeur de chaleur (2) pouvant être raccordé au passage de circulation ;
une enveloppe (12, 13, 14) servant à recouvrir une surface avant de l'échangeur de chaleur, l'enveloppe possédant une structure d'ouverture d'entretien (13, 14) servant à exposer une ouverture (24) de la surface avant de l'échangeur de chaleur lors d'un entretien ; et
un appareil d'évacuation d'air servant à évacuer l'air entrant dans le passage de circulation de l'échangeur de chaleur (2), l'appareil d'évacuation d'air comprenant une soupape (25) raccordée au passage de circulation et ayant une buse (28) servant à évacuer l'air ; et
un matériel de fixation (27) servant à fixer la soupape à la surface avant de l'échangeur de chaleur qui aspire l'air, le matériel de fixation comprenant une plaque de base (30) ; **caractérisée en ce que** :
une partie de maintien (31) est disposée sur une surface avant de la plaque de base maintenant l'appareil d'évacuation d'air dans la surface avant de la plaque de base de façon que la buse de l'appareil d'évacuation d'air soit orientée vers l'échangeur de chaleur, dans laquelle la soupape (25) est disposée dans la surface avant de l'échangeur de chaleur faisant face à l'ouverture de l'enveloppe.

2. Unité d'échange de chaleur selon la revendication 1, dans laquelle :
le matériel de fixation comporte en outre, devant la buse, un réducteur de force (38) servant à diminuer la force du milieu évacué par la buse de la soupape .

3. Unité d'échange de chaleur selon l'une quelconque des revendications 1 à 2, dans laquelle :
l'échangeur de chaleur comporte un tube de transfert de chaleur (40) servant à amener le milieu à s'écouler à travers l'intérieur, moyennant quoi la chaleur du milieu est transmise ; et
le matériel de fixation comporte en outre une partie de montage (32) qui s'adapte au tube de transfert de chaleur de l'échangeur de chaleur afin de fixer le matériel de fixation à l'échangeur de chaleur, la partie de montage étant située de préférence sur une surface arrière de la plaque de base.

4. Unité d'échange de chaleur selon l'une quelconque des revendications 1 à 3, dans laquelle :
la soupape comporte un bouton de commande (29) servant à ouvrir et à fermer la soupape ; et
la plaque de base (30) comporte une région de garde qui s'étend dans l'espace entre le bouton de commande et l'échangeur de chaleur dans un état dans lequel la soupape est maintenue dans la partie de maintien.

5. Unité d'échange de chaleur selon l'une quelconque des revendications 1 à 4, comprenant en outre :
un tube (26) raccordant le passage de circulation et la soupape ; dans laquelle :
le matériel de fixation comporte en outre un film protecteur (33) servant à protéger le tube de l'échangeur de chaleur, le film protecteur étant disposé entre le tube et l'échangeur de chaleur.

6. Unité d'échange de chaleur selon l'une quelconque des revendications 1 à 2, dans laquelle :
le matériel de fixation comporte en outre un capot (31) servant à recouvrir la périphérie de la buse de la soupape dans un état dans lequel la soupape est maintenue dans la partie de maintien.

7. Unité d'échange de chaleur selon la revendication 1, dans laquelle :
la partie de maintien comporte une partie de serrage (34) servant à bloquer la soupape , une partie de verrouillage (35) servant à immobiliser la partie de serrage afin de maintenir la soupape dans un état dans lequel elle est bloquée par la partie de serrage, et une zone de blocage de la soupape ; et
la zone de blocage de la soupape formée quand la partie de serrage est immobilisée par la partie de verrouillage comprend une portion plus petite que la forme externe de la soupape .

8. Unité d'échange de chaleur selon l'une quelconque des revendications 1 à 7, dans laquelle :
le matériel de fixation fixe la buse en place dans une position où le milieu évacué par la buse s'écoule sur la surface avant de l'échangeur de chaleur.

9. Unité d'échange de chaleur selon l'une quelconque des revendications 1 à 8, dans laquelle :
la plaque de base comporte, sur une surface avant, une nervure (30f) s'étendant d'un bord terminal (30d) à un autre bord terminal (30e) qui se trouvent l'un en face de l'autre horizontalement.
